# FASCICULE DE BREVET EUROPEEN

(11) **EP 2 008 356 B1**
(45) Date de publication et mention de la délivrance du brevet: **22.08.2012**
(21) Numéro de dépôt: 07728164.0
(22) Date de dépôt: 17.04.2007
(51) Int. Cl.: H02K 41/03, H02K 9/02

(54) **SUPPORT POUR UN MOTEUR ELECTRIQUE LINEAIRE COMPORTANT DES MOYENS DE COMPENSATION THERMIQUE ET DE REFROIDISSEMENT**
STÄNDER FÜR EINEN ELEKTRISCHEN LINEARMOTOR MIT THERMISCHER KOMPENSATION UND KÜHLMITTELN
STAND FOR A LINEAR ELECTRIC MOTOR COMPRISING THERMAL COMPENSATION AND COOLING MEANS

(30) Priorité: 20.04.2006 FR 0651393
(43) Date de publication de la demande: 31.12.2008
(73) Titulaire: Sidel Participations, 76930 Octeville Sur Mer (FR)
(72) Inventeur: DUCHEMIN, Guillaume, 76930 Octeville sur Mer (FR); MOUGIN, Didier, 76930 Octeville sur Mer (FR)
(74) Mandataire: Thibaudeau, David A. C. R.
(86) Numéro de dépôt international: PCT/EP2007/053699
(87) Numéro de publication internationale: WO 2007/122135

(56) Documents cités:
- WO-A-02/063749
- DE-A1- 10 320 553
- US-A- 4 839 545
- US-A1- 2005 258 688
- US-A1- 2006 049 700

## Description

La présente invention concerne un support pour un moteur électrique linéaire comportant des moyens de compensation thermique de la dilatation du support et de refroidissement.

La présente invention concerne plus particulièrement un support pour un moteur électrique linéaire comportant un primaire et un secondaire, le support s'étendant avec le primaire dans un plan vertical et étant monté mobile longitudinalement par l'intermédiaire de moyens de guidage sur une structure comportant le secondaire, le support comportant une plaque centrale dont est solidaire le primaire et qui se raccorde respectivement par une première partie de raccordement à une première aile supérieure et par une deuxième partie de raccordement à une deuxième aile inférieure, chacune des ailes comportant une partie des moyens de guidage du support par rapport à la structure qui comporte l'autre partie complémentaire des moyens de guidage.

On connaît de nombreux supports pour un moteur électrique linéaire, notamment un moteur linéaire du type "à plat".

En effet, de tels moteurs sont susceptibles d'être mis en oeuvre industriellement dans de nombreuses applications, en particulier pour réaliser des opérations de transfert ou convoyage dans des machines.

Les moteurs linéaires permettent notamment d'obtenir en fonctionnement de fortes accélérations, une vitesse élevée de déplacement ainsi qu'une grande précision dans le positionnement.

Cependant, on a constaté pour certaines applications des problèmes d'usure prématurée des moyens de guidage, en particulier lorsque de tels moteurs linéaires sont utilisés dans une machine pour réaliser des opérations de transfert successives et parfois répétées à des cadences importantes.

Ces problèmes d'usure sont notamment à l'origine de fréquentes et coûteuses interventions de maintenance des machines qui nécessitent de surcroît un arrêt des machines.

Le document US 2006/049700 décrit un support comportant des moyens de dissipation de chaleur, plus précisément par convection avec l'air ambiant, qui sont propres à éviter la dilatation du support en dissipant la chaleur. Toutefois, de tels moyens de dissipation sont insuffisants.

L'objet de la présente invention est de proposer un support permettant notamment de résoudre les inconvénients précités.

Dans ce but, l'invention propose un support pour un moteur linéaire du type décrit précédemment, caractérisé en ce que le support comporte des moyens de compensation de la dilatation thermique du support de manière à absorber la dilatation thermique du matériau du support provoquée par l'échauffement du primaire en fonctionnement, lesdits moyens de compensation étant constitués par des fentes oblongues s'étendant au moins sur tout ou partie de la longueur des parties de raccordement du support et délimitant des ponts de raccordement et en ce que les fentes constituent des ouïes de refroidissement à travers lesquelles s'effectue une circulation d'air forcée lors du déplacement du support permettant un refroidissement du primaire par convection.

Avantageusement, les fentes du support selon l'invention constituent des moyens de compensation de la dilatation thermique du support et des moyens de refroidissement dudit support de manière à respectivement absorber et limiter la dilatation thermique du matériau du support provoquée par l'échauffement du primaire en fonctionnement.

Avantageusement, les moyens de compensation selon l'invention permettent d'absorber la dilatation thermique du matériau du support en lui conférant localement une zone élastique présentant une capacité de déformation susceptible de compenser la dilatation thermique.

Selon d'autres caractéristiques de l'invention :
- les moyens de compensation constitués par les fentes sont susceptibles d'absorber la dilatation thermique du matériau du support selon une direction déterminée qui est orthogonale à direction de déplacement du support de manière à limiter la transmission d'efforts aux moyens de guidage ;
- les fentes formant les moyens de compensation de la dilatation thermique du support sont agencés dans les première et deuxième parties de raccordement de la plaque centrale avec chacune des ailes supérieure et inférieure ;
- les fentes s'étendent parallèlement les unes aux autres ;
- le support comporte un logement interne dans lequel est reçu le primaire, ledit logement étant ouvert longitudinalement à chacune de ses extrémités et transversalement en direction du secondaire agencé en vis-à-vis ;
- le support présente, en coupe verticale par un plan transversal, une partie centrale globalement en forme de "U" délimitant le logement et dont la plaque centrale verticale constitue la branche intermédiaire se raccordant aux branches parallèles formées par les parties supérieure et inférieure de raccordement qui s'étendent globalement horizontalement ;
- les fentes s'étendent transversalement de manière rectiligne dans les parties supérieure et inférieure de raccordement du support ;
- la structure appartient à une machine, telle qu'une machine d'emballage, et des moyens de transfert de la machine sont fixés sur la face verticale externe du support qui est susceptible d'entraîner longitudinalement lesdits moyens de transfert.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective qui représente schématiquement, en éclaté, un agencement comportant un moteur linéaire et un support selon l'invention qui est monté mobile sur une structure ;
- la figure 2 est une vue en coupe transversale selon un plan vertical de l'agencement de la figure 1 représenté en position assemblée

Dans la description qui va suivre, des chiffres de référence identiques désignent des pièces identiques ou ayant des fonctions similaires.

Pour la description de l'invention, on adoptera à titre non limitatif et afin d'en faciliter la compréhension les orientations longitudinale, verticale et transversale selon le repère L, V, T indiqué aux figures et dans lesquelles l'orientation verticale ne fait pas nécessairement référence à la pesanteur terrestre.

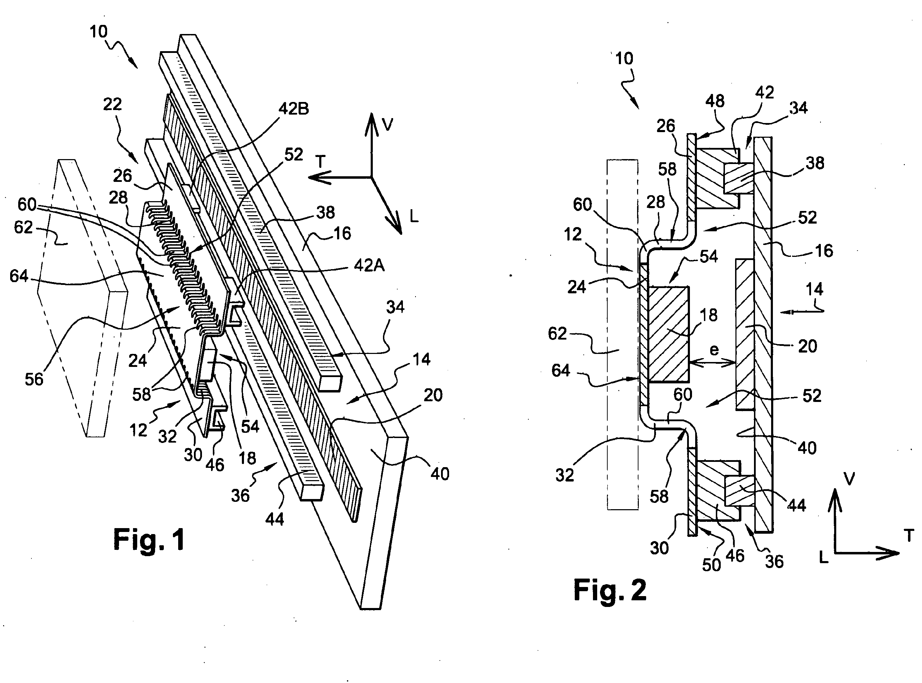

On a représenté à la figure 1, un agencement 10 comportant principalement un support 12 pour un moteur linéaire 14 selon un exemple de réalisation préféré de l'invention et une partie d'une structure 16, telle qu'un bâti d'une machine (non représentée).

Le moteur électrique linéaire 14 est un moteur linéaire du type "à plat" qui est respectivement constitué d'un primaire 18 de forme globalement parallélépipédique et d'un secondaire 20.

De préférence, le primaire 18 est solidaire du support 12 de manière à former un équipage mobile par rapport à la structure 16 dont est solidaire le secondaire 20.

Selon le repère (L, V, T) représenté aux figures, le support 12 portant le primaire 18 s'étend ici globalement dans un plan moyen d'orientation verticale.

Le secondaire 20 est agencé verticalement et transversalement en vis-à-vis du primaire 18 à une distance correspondant à une valeur déterminée d'entrefer "e".

Le secondaire 20 s'étend ici de manière rectiligne selon la direction longitudinale pour constituer une voie d'aimants déterminant la voie de déplacement du support 12 et du primaire 18 par rapport à la structure 16.

Le support 12 est monté mobile sur la structure 16 par rapport à laquelle il se déplace horizontalement selon la direction longitudinale par l'intermédiaire des moyens de guidage 22.

Les moyens de guidage 22 sont agencés entre le support 12 et la structure 16, de part et d'autre du secondaire 20.

Le support 12 comporte une plaque centrale 24, dont est solidaire le primaire 18, qui se raccorde respectivement à une première aile, dite supérieure, 26 par une première partie 28 de raccordement et à une deuxième aile, dite inférieure, 30 par une deuxième partie 32 de raccordement

Les moyens de guidage 22 du support 12 comportent des moyens de guidage, dit supérieur, 34 et des moyens de guidage, dit inférieur, 36.

Les moyens de guidage supérieur 34 et les moyens de guidage inférieur 36 sont ici identiques et avantageusement du type à "guide à billes".

Chacun des moyens de guidage 22 comportent respectivement une première partie fixe constituée par un rail longitudinal solidaire de la structure 16 et une partie mobile qui est susceptible de coulisser sur le rail et qui est constituée par au moins un patin monté solidaire d'une des ailes 26, 30 du support 12.

Les moyens de guidage supérieur 34 comportent un rail longitudinal supérieur 38 qui est fixé sur une face verticale 40 de la structure et une paire de patins supérieurs 42, respectivement un patin supérieur avant 42A et un patin supérieur arrière 42B.

De la même manière, les moyens de guidage inférieur 36 comportent un rail longitudinal inférieur 44 qui est fixé sur la face verticale 40 de la structure 16 et une paire de patins inférieurs 46, respectivement un patin inférieur avant et un patin inférieur arrière (non représentés).

Comme on peut mieux le voir sur la figure 2, les patins supérieurs 42 sont montés solidaires de la face verticale interne 48 de l'aile supérieure 26 et les patins inférieurs 46 sont montés solidaires de la face verticale interne 50 de l'aile inférieure 30 du support 12.

Ainsi, chacune des ailes supérieure 26 et inférieure 30 comporte respectivement une paire de patins 42, 46 formant !a partie mobile des moyens de guidage 22 destinés à guider le support 12 par rapport aux rails longitudinaux 38, 44 de la structure 16.

Les moyens de guidage 22 du support 12 ne comportent pas de jeu, c'est-à-dire que les patins ne sont pas montés "flottant" par rapport aux rails, de sorte que les moyens 22 ne comportent pas de débattement suivant au moins la direction verticale.

Ainsi, lorsque le support 12 effectue des déplacements répétitifs, tels que des va-et-vient, le primaire 18 s'échauffe et transmet alors de la chaleur par conduction au support 12.

Le support 12 est susceptible d'atteindre, selon les applications, des températures de l'ordre de 64°C à 90°C qui provoquent des phénomènes de dilatation thermique du matériau du support 12.

Sous l'effet de la dilatation thermique du matériau, le support 12 tend à se déformer ce qui provoque l'apparition d'efforts de poussée d'orientation verticale qui s'exercent respectivement vers le haut sur les moyens de guidage supérieur 34 et vers le bas sur les moyens de guidage inférieur 36.

Ces efforts "parasites" dus à la dilatation thermique du matériau s'exercent donc orthogonalement à la direction longitudinale de déplacement du support 12 déterminée par les rails 38, 44.

Or, ces efforts provoquent notamment une usure prématurée des moyens de guidage 34, 36 et sont parfois susceptibles d'affecter le guidage du support 12.

Avantageusement, le support 12 comporte donc des moyens de compensation 52 de la dilatation thermique du support 12 de manière à absorber la dilatation thermique du matériau du support que provoque l'échauffement du primaire 18 en fonctionnement.

De préférence, les moyens de compensation 52 sont susceptibles d'absorber la dilatation thermique du support selon une direction déterminée, ici verticale, qui est orthogonale à direction longitudinale de déplacement du support 12 de manière à limiter la transmission aux moyens de guidage supérieur 34 et inférieur 36 des efforts verticaux de poussée dus à la dilatation du support 12, en particulier de la dilatation de la plaque centrale 24 qui est au contact du primaire 18.

Avantageusement, les moyens de compensation 52 du support 12 sont susceptibles de compenser la dilatation thermique du matériau lorsque le primaire 18 s'échauffe de manière que les moyens de guidage 22 du support 12 ne soient pas ou peu affectés par ces efforts.

Les moyens de compensation 52 sont constitués par des fentes 58 oblongues délimitant des ponts 60 de raccordement et les fentes 58 constituent des ouïes de refroidissement à travers lesquelles s'effectue une circulation d'air forcée lors du déplacement du support 12 permettant un refroidissement du primaire 18 par convection.

Grâce à l'invention, on prolonge ainsi la durée de fonctionnement des moyens de guidage 22 et on réduit les opérations de maintenance nécessaires.

De préférence, les fentes 58 formant les moyens 52 de compensation de la dilatation thermique du support sont agencés dans la première partie 28 de raccordement et deuxième partie 32 de raccordement de la plaque centrale 24 avec chacune des ailes supérieure 26 et inférieure 30.

Selon un exemple de réalisation du support 12 représenté aux figures 1 et 2, le support 12 comporte un logement interne 54 dans lequel est reçu le primaire 18, ledit logement 54 étant ouvert longitudinalement à chacune de ses extrémités et transversalement en direction du secondaire 20 agencé en vis-à-vis sur la structure 16.

Ainsi, le support 12 présente, en coupe verticale par un plan transversal, une partie centrale 56 en forme de "U" délimitant le logement 54 et dont la plaque centrale 24, ici verticale, constitue la branche intermédiaire se raccordant aux branches parallèles formées respectivement par les parties supérieure 28 et inférieure 32 de raccordement qui s'étendent ici globalement horizontalement.

Les moyens de compensation 52 sont constitués par une pluralité de fentes 58 délimitant les ponts 60 de raccordement.

Plus précisément, chaque pont 60 de raccordement est délimité longitudinalement par deux fentes 58 consécutives.

Comme on peut mieux le voir sur la coupe de la figure 2, les fentes 58 sont oblongues et présentent, en coupe, globalement une forme de "S".

Les fentes 58 comportent ainsi une partie centrale principale s'étendant transversalement dans l'ensemble des parties supérieure 28 et inférieure 32 de raccordement et qui se prolonge verticalement respectivement dans la partie adjacente de la plaque centrale 24 et dans la partie adjacente de chacune des ailes supérieure 26 et inférieure 30.

De préférence, les fentes 58 s'étendent parallèlement les unes aux autres et sur tout ou partie de la longueur des parties supérieure 28 et inférieure 32 de raccordement.

Les fentes 58 s'étendent ici transversalement de manière rectiligne dans les parties supérieure 28 et inférieure 32 de raccordement du support 12.

Avantageusement, les fentes 58 constituent des ouïes de refroidissement à travers lesquelles s'effectue une circulation d'air "forcée" lors du déplacement du support 12 permettant un refroidissement du primaire 18 et du support 12 par convection.

En variante (non représentée), le support 12 comporte des moyens complémentaires de dissipation de chaleur, tels que des ailettes, de manière à limiter l'échauffement du support 12 en le refroidissant.

Avantageusement, le support 12 est susceptible d'être mis en oeuvre dans une machine (non représentée), telle qu'une machine d'emballage, dans laquelle l'agencement 10 est par exemple mis en oeuvre pour réaliser un dispositif de transfert (non représenté) entre au moins deux postes de travail.

Avantageusement, le support 12 est susceptible d'entraîner en déplacement des moyens de transfert 62 d'une telle machine, tels que des moyens de préhension d'un emballage du type carton.

Les moyens de transfert 62 sont par exemple montés solidaire de la face verticale externe 64 de la plaque centrale 24 du support 12.

Avantageusement le moteur linéaire 14 comporte un servomoteur destiné à commander son déplacement, notamment sa position et sa vitesse.

Avantageusement, un tel dispositif de transfert comportant un moteur linéaire permet de réaliser une machine présentant une compacité supérieure par rapport à une machine comportant des moyens de transfert conventionnels du type à courroies ou chaînes entraînées par moteur électrique.

De plus, le support 12 selon l'invention permet d'optimiser la durée de fonctionnement des moyens de guidage 22, de réduire les coûts imputables en particulier aux changements des organes des moyens 22 et à la fréquence des opérations de maintenance.

Le support 12 selon l'invention constitue par conséquent une solution particulièrement économique à mettre en oeuvre, notamment par rapport à une solution consistant à prévoir des moyens de refroidissement actif, par exemple par circulation d'eau, particulièrement encombrante et coûteuse.

## Revendications

1. Support (12) pour un moteur électrique linéaire (14) comportant un primaire (18) et un secondaire (20), le support (12) étant monté mobile longitudinalement par l'intermédiaire de moyens de guidage (22) sur une structure (16) comportant le secondaire (20), le support (12) comportant une plaque centrale (24) dont est solidaire le primaire (18) et qui se raccorde respectivement par une première partie de raccordement (28) à une première aile supérieure (26) et par une deuxième partie de raccordement (32) à une deuxième aile inférieure (30), chacune des ailes (26, 30) comportant une partie des moyens de guidage (22) du support par rapport à la structure (16) qui comporte l'autre partie complémentaire des moyens de guidage (22),
**caractérisé en ce que** le support (12) comporte des moyens de compensation (52) de la dilatation thermique du support (12) de manière à absorber la dilatation thermique du matériau du support (12) provoquée par l'échauffement du primaire (18) en fonctionnement, lesdits moyens de compensation (52) étant constitués par des fentes (58) oblongues s'étendant au moins sur tout ou partie de la longueur des parties de raccordement (28, 32) du support (12) et délimitant des ponts (60) de raccordement et **en ce que** les fentes (58) constituent des ouïes de refroidissement à travers lesquelles s'effectue une circulation d'air forcée lors du déplacement du support (12) permettant un refroidissement du primaire (18) par convection.

2. Support selon la revendication 1, **caractérisé en ce que** les moyens de compensation (52) constitués par les fentes (58) sont susceptibles d'absorber la dilatation thermique du matériau du support (12) selon une direction déterminée qui est orthogonale à direction de déplacement du support (12) de manière à limiter la transmission d'efforts aux moyens de guidage (22).

3. Support selon l'une des revendications 1 ou 2, **caractérisé en ce que** les fentes (58) formant les moyens de compensation (52) de la dilatation thermique du support (12) sont agencés dans les première et deuxième parties de raccordement (28, 32) de la plaque centrale (24) avec chacune des ailes supérieure (26) et inférieure (30).

4. Support selon l'une quelconque des revendications précédentes, **caractérisé en ce que** les fentes (58) s'étendent parallèlement les unes aux autres.

5. Support selon l'une quelconque des revendications 5. Support selon l'une quelconque des revendications précédentes, **caractérisé en ce que** le support (12) comporte un logement interne (54) dans lequel est reçu le primaire (18), ledit logement (54) étant ouvert longitudinalement à chacune de ses extrémités et transversalement en direction du secondaire (20) agencé en vis-à-vis.

6. Support selon la revendication 5, **caractérisé en ce que** le support (12) présente, en coupe verticale par un plan transversal, une partie centrale (56) globalement en forme de "U" délimitant le logement (54) et dont la plaque centrale verticale (24) constitue la branche intermédiaire se raccordant aux branches parallèles formées par les parties supérieure (28) et inférieure (32) de raccordement qui s'étendent globalement horizontalement.

7. Support selon la revendication 6, **caractérisé en ce que** les fentes (58) s'étendent transversalement de manière rectiligne dans les parties supérieure (28) et inférieure (32) de raccordement du support (12).

8. Support selon l'une quelconque des revendications précédentes, **caractérisé en ce que** la structure (16) appartient à une machine, telle qu'une machine d'emballage, et **en ce que** des moyens de transfert (62) de la machine sont fixés sur la face verticale externe (64) du support (12) qui est susceptible d'entraîner longitudinalement lesdits moyens de transfert (62).

## Claims

1. A stand (12) for a linear electric motor (14) comprising a primary (18) and a secondary (20), the stand (12) being mounted movable longitudinally by means of guide means (22) on a structure (16) comprising the secondary (20), the stand (12) comprising a central plate (24) to which the primary (18) is secured and which is connected respectively via a first connection portion (28) to a first upper wing (26) and via a second connection portion (32) to a second lower wing (30), each of the wings (26, 30) comprising a portion of the means (22) for guiding the stand relative to the structure (16) which comprises the other matching portion of the guide means (22),
**characterized in that** the stand (12) comprises means (52) for compensating for the thermal expansion of the stand (12) in order to absorb the thermal expansion of the material of the stand (12) caused by the heating of the primary (18) in operation, said compensation means (52) consisting of oblong slots (58) extending at least over all or a portion of the length of the connection portions (28, 32) of the support (12) and delimiting connection bridges (60) and **in that** the slots (58) form cooling vents through which a forced air circulation takes place during the movement of the stand (12) allowing the primary (18) to be cooled by convection.

2. The stand as claimed in claim 1, **characterized in that** the compensation means (52) consisting of the slots (58) are capable of absorbing the thermal expansion of the material of the stand (12) in a determined direction which is orthogonal to the direction of movement of the stand (12) in order to limit the transmission of forces to the guide means (22).

3. The stand as claimed in one of claims 1 or 2, **characterized in that** the slots (58) forming the means (52) for compensating for the thermal expansion of the stand (12) are arranged in the first connection portion (28) and second connection portion (32) of the central plate (24) with each of the wings, the upper wing (26) and the lower wing (30).

4. The stand as claimed in any one of the preceding claims, **characterized in that** the slots (58) extend parallel to one another.

5. The stand as claimed in any one of the preceding claims, **characterized in that** the stand (12) comprises an inner housing (54) in which the primary (18) is received, said housing (54) being open longitudinally at each of its ends and transversely in the direction of the secondary (20) arranged opposite.

6. The stand as claimed in claim 5, **characterized in that** the stand (12) has, in vertical section via a transverse plane, a central portion (56) that is generally "U"-shaped delimiting the housing (54) and whose central vertical plate (24) forms the intermediate branch connecting to the parallel branches formed by the upper connection portion (28) and lower connection portion (32) which extend generally horizontally.

7. The stand as claimed in claim 6, **characterized in that** the slots (58) extend transversely in a rectilinear manner in the upper connection portion (28) and lower connection portion (32) of the stand (12).

8. The stand as claimed in any one of the preceding claims, **characterized in that** the structure (16) belongs to a machine, such as a packaging machine, and **in that** means (62) of transfer of the machine are attached to the outer vertical face (64) of the stand (12) which is capable of driving said transfer means (62) longitudinally.

## Patentansprüche

1. Träger (12) für einen linearen Elektromotor (14), der eine Primärwicklung (18) und eine Sekundärwicklung (20) enthält, wobei der Träger (12) über Führungsmittel (22) an einer Struktur (16), die die Sekundärwicklung (20) aufweist, longitudinal beweglich montiert ist, wobei der Träger (12) eine Mittelplatte (24) aufweist, mit der die Primärwicklung (18) fest verbunden ist und die durch einen ersten Verbindungsteil (28) mit einem ersten oberen Flügel (26) bzw. durch einen zweiten Verbindungsteil (32) mit einem zweiten unteren Flügel (30) verbunden ist, wobei jeder der Flügel (26, 30) einen Teil der Führungsmittel (22) des Trägers in Bezug auf die Struktur (16) enthält, die den anderen komplementären Teil der Führungsmittel (22) enthält,
**dadurch gekennzeichnet, dass** der Träger (12) Kompensationsmittel (52) für die Wärmeausdehnung des Trägers (12) umfasst, derart, dass die Wärmeausdehnung des Materials des Trägers (12), die durch die Erwärmung der Primärwicklung (18) im Betrieb hervorgerufen wird, absorbiert wird, wobei die Kompensationsmittel (52) durch längliche Schlitze (58) gebildet sind, die sich wenigstens über einen Teil oder die gesamte Länge der Verbindungsteile (28, 32) des Trägers (12) erstrecken und Verbindungsbrücken (60) begrenzen, und dass die Schlitze (58) Kühlungseinlässe bilden, durch die eine erzwungene Luftzirkulation bei einer Verlagerung des Trägers (12) erfolgt, die eine Kühlung der Primärwicklung (18) durch Konvektion ermöglicht.

2. Träger nach Anspruch 1, **dadurch gekennzeichnet, dass** die durch die Schlitze (58) gebildeten Kompensationsmittel (52) die Wärmeausdehnung des Materials des Trägers (12) in einer bestimmten Richtung, die zu der Verlagerungsrichtung des Trägers (12) senkrecht ist, absorbieren können, so dass die Übertragung von Kräften auf die Führungsmittel (22) begrenzt ist.

3. Träger nach einem der Ansprüche 1 oder 2, **dadurch gekennzeichnet, dass** die Schlitze (58), die die Kompensationsmittel (52) für die Wärmeausdehnung des Trägers (12) bilden, in dem ersten und in dem zweiten Verbindungsteil (28, 32) der Mittelplatte (24) mit dem oberen Flügel (26) bzw. dem unteren Flügel (30) angeordnet sind.

4. Träger nach einem der vorhergehenden Ansprüche, **dadurch gekennzeichnet, dass** sich die Schlitze (58) zueinander parallel erstrecken.

5. Träger nach einem der vorhergehenden Ansprüche, **dadurch gekennzeichnet, dass** der Träger (12) einen inneren Aufnahmesitz (54) aufweist, in dem die Primärwicklung aufgenommen ist, wobei der Aufnahmesitz (54) in Längsrichtung an jedem seiner Enden und in Querrichtung in Richtung der gegenüber angeordneten Sekundärwicklung (20) offen ist.

6. Träger nach Anspruch 5, **dadurch gekennzeichnet, dass** der Träger (12) im vertikalen Schnitt in einer transversalen Ebene einen Mittelteil (56) aufweist, der im Allgemeinen "U"-förmig ist und den Aufnahmesitz (54) begrenzt, wobei die vertikale Mittelplatte (24) den Zwischenabschnitt bildet, der mit den parallelen Abschnitten verbunden ist, die durch den oberen (28) und den unteren (32) Verbindungsteil gebildet sind, die sich im Allgemeinen horizontal erstrecken.

7. Träger nach Anspruch 6, **dadurch gekennzeichnet, dass** sich die Schlitze (58) geradlinig quer in dem oberen (28) und in dem unteren (32) Verbindungsteil des Trägers (12) erstrecken.

8. Träger nach einem der vorhergehenden Ansprüche, **dadurch gekennzeichnet, dass** die Struktur (16) zu einer Maschine wie etwa einer Verpackungsmaschine gehört und dass die Übertragungsmittel (62) der Maschine an der äußeren vertikalen Fläche (64) des Trägers (12) befestigt sind, die die Übertragungsmittel (62) in Längsrichtung antreiben kann.
